# EUROPEAN PATENT APPLICATION

(11) **EP 1 788 215 A1**
(43) Date of publication of application: **23.05.2007**
(21) Application number: 05110892.6
(22) Date of filing: 17.11.2005
(51) Int. Cl.: F01N 7/00

(54) **An adaptor for access openings in a heat shield, a heat shield and a method for installation of an adaptor**

(71) Applicant: Ford Global Technologies, LLC, Dearborn, MI 48126 (US)
(72) Inventor: Arandjelovic, Vladimir, 418 33, Göteborg (SE)
(74) Representative: Andersson, Per Rune

(57) **Abstract**

The invention relates to an adaptor (104) for access openings (103) in a heat shield (102), a heat shield and a method for installation of an adaptor. The purpose of the invention is to prevent an untight sealing and escape of hot cooling air through the gap between a sensor or the like and the edges of the access opening (103) in the heat shield. According to the invention, the adaptor comprises first and second adaptor segments (106,107), each one of a generally flat material provided with a hole. One of the adaptor segments (106,107) is positioned on top of the other adaptor segment (106,107) so as to form a through going hole. The adaptor segments are attached to each other at a location spaced apart from their outer circumferences so as to form a gap (110) between each other at the outer circumferences around the hole. The gap (110) is adapted to receive an edge of an access opening (103) of the heat shield so as to allow the adaptor (104), to move in the plane of the heat shield (X-Y plane). By this arrangement, it will be easier to fit a heat shield plate of an engine manifold or exhaust gas conduit while still not requiring a tighter tolerance in manufacturing precision of the heat shield.

## Description

### TECHNICAL FIELD

The invention relates to the technical field of heat shields for engines or exhaust gas conduits in a vehicle. In particular, the invention relates to the sealing of access openings in the heat shield, e.g. for allowing the penetration of a lambda probe or the like to be mounted on the engine or exhaust gas conduits while having portions thereof on either side of the heat shield.

### BACKGROUND ART

It is known to have one or several probes or sensors mounted on a vehicle exhaust gas manifold or conduit. These probes or sensors have generally one part penetrating through the wall of the exhaust gas conduit or manifold, the part comprising a sensing element, in order to be in contact with the exhaust gases and another part, the sensor head, protruding out from the conduit or manifold. These probes might be screwed or welded onto the conduits in order to provide a tight sealing so as to avoid leakage of the exhaust gases. The manifold or exhaust gas conduits are covered with a heat shield. The heat shield is usually spaced apart from the conduits in order to achieve heat insulation by the air gap thereby created. These heat shields are provided with holes through which the probe or sensor is further protruding. Due to constructional aspects and mounting ability, these holes are made larger than what is actually needed in order to assure that the heat shield will fit. By this approach, discarding of heat shields decreases. On the other hand, this will lead to an untight sealing and escape of hot cooling air through the gap between the sensor and the edges of the holes in the heat shield. A specific problem with these leaks is that they occur adjacent to the probes or sensors. Even though the sensor itself usually is resistant to heat, the sensor heads are sensitive to heat and may be damaged and ruined by the streaming hot air. In addition, there are usually other components, e.g. tubing, hoses, cables or other heat sensitive devices, which also may be damaged of this uncontrolled flow of hot air.

In US 2004/0163468 there is described an impact absorber for an exhaust sensor. The impact absorber comprises a collar of deformable material which may or may not be of a heat degradable material. When mounted on an exhaust conduit, the collar will be attached adjacent to the outside of the exhaust gas conduit and may provide radiation shielding to the sensor. In DE 103 06 412 a heat shield device for a lambda probe is described. The heat shield device is intended to shield the probe from radiating heat coming from the side from a connecting conduit. The problem of heat shielding of sensors is also disclosed in US 5,791,782, in which the probe is protected by a heat insulating casing and shielding of surrounding electrical wires is achieved. US 6,266,997 describes that thermal heat is directed to an outside diameter of a heat sensing element and thereby preventing excessive heat to contact a cable seal material and a terminal connection.

However, even if the above mentioned documents teach of different way of protecting an exhaust gas sensor from overheating and shielding different parts of the sensor or adjacent parts, none of the documents teaches how to improve the heat shielding effect of a conventional heat shield in an engine. Hence, the present invention provides an effective improvement in the way of using a conventional heat shield which easily can be adapted to different kind of sensors of different sizes. Furthermore, the present invention will contribute to make it easier to fit a heat shield plate of an engine manifold or exhaust gas conduit while still not requiring a tighter tolerance in manufacturing precision of the heat shield. In another aspect of the invention, this novel construction will reduce the need of heat shielding of the head of the probe or sensors itself and thereby facilitating the manufacturing of the sensors. Hence, there is still a need for an improved arrangement and method for heat shielding of probes, sensors and the like objects which are heat sensitive and located at or near exhaust gas conduits or manifolds.

### DISCLOSURE OF INVENTION

The present invention discloses a novel device for heat shielding of sensors, probes and the like devices fitted on the engine exhaust manifold or system. According to the invention, this problem is solved by the use of an adaptor for access openings in a heat shield of a vehicle. The adaptor comprises a first and a second adaptor segment of a generally flat material. Each adaptor segment has an outer circumference and an inner circumference whereby the inner circumference defines a hole in each adaptor segment. One of the adaptor segments is positioned on top of the other adaptor segment so as to form a through going hole. The adaptor segments are attached to each other at a location spaced apart from its outer circumferences so as to form a gap between each other at at least one of the adaptor segments outer circumferences around the hole. The gap created is adapted to receive an edge of an access opening of the heat shield so as to allow the adaptor to move in the plane of the heat shield (X-Y plane). It shall be noted that, the gap is not necessarily created at the outer circumference of the same adaptor segment around the whole circumference but it may be the case that it might alter between the outer circumference of the first and the second adaptor segment.

A further beneficial effect of this arrangement is that it will not only provide a more efficient heat shielding of the object penetrating through the heat shield but also for all the components located above the access openings, e.g. tubing, hoses, cables or other heat sensitive devices, which also may be damaged of this uncontrolled flow of hot air. Hence, this adaptor is obviously applicable for any kind of access openings in a heat shield and will reduce the amount of hot air streaming through the heat shield.

The material to be used is defined as a generally flat material, e.g. a sheet material of metal, a composite, a ceramic paper or another suitable, heat resistant material. Instead of using a single sheet material, the material used may be made of a double sheet spaced apart, a mixed layer of for example metal and ceramic paper or a sandwiched product, e.g. a ceramic paper sandwiched between thin metal sheets. The material choice depends on a desire to make the adaptor sufficiently strong, heat resistant and adapted to minimize the heat radiation to the cold side of the adaptor. The adaptor segments can be made of form pressed sheets or from ready made lamella. The shape of the adaptor segments may vary and there is no need for the inner circumferences to have the same shape as the outer circumferences, neither need the outer circumferences of the two adaptor segments have the same size and shape or vice versa. However, in general are the contours of the inner and outer circumferences and sizes of the two adaptor segments essentially the same and when put together these two adaptor segments forms a flat adaptor element.

Either of the first or second adaptor segments may comprise a cylinder segment having a first end and a second end. The first end has a circumference of essentially the same shape and size as the inner circumference of at least one of the adaptor segments. The first end of the cylinder segment is attached to the inner circumference of the at least one segment.

The use of this cylinder segment may vary, as will be seen later, but one obvious purpose is to work as a help in aligning the adaptor segments when assembling the adaptor and fix it to the heat shield. If this cylinder segment is positioned at the inner circumference of an adaptor element having a slightly smaller inner circumference than the other adaptor segment, the two segments can easily be fitted into each other by letting the cylinder element fit into the inner circumference of the other adaptor element. For this purpose, the height of the cylinder element may be very small; it is enough if it only reaches the inner circumference of the other cylinder segment.

There is of course other ways to align the two adaptor segments to correctly fit with each other, they may for example be provided with notches and indentations at proper locations to show when suitably fitted in with each other.

Furthermore, also the other adaptor segment may comprise another cylinder segment attached to the inner circumference of the other segment.

When referring to "cylinder segment", this is intended to include a hollow body which walls can be circular, hexagon, quadratic or any desired shape.

The cylinder segments may be of different heights which may be decided in order to achieve a correct distance between the heat shield and the exhaust manifold where the probe is fitted. By this arrangement, the complete part of the probe sticking out of the exhaust manifold will be protected. In order to further ensure reliable heat shielding of the complete part of the probe sticking out of the exhaust manifold, the second end of the first cylinder segment can be attached to an outer circumference of a third adaptor segment of a generally flat material provided with a hole. The probe may enter through the hole and be fastened to the exhaust manifold. This third adaptor segment may be forced down to be positioned adjacent to the exhaust manifold by means of a skirt on the probe, a screw nut fitted on threads on the probe or like means in order to make a close fit.

In one embodiment, the first or second adaptor segment, the first cylinder segment and the third adaptor segment are formed in one piece by moulding, compression moulding, pressing or bending of sheet metal or other suitable material.

In another embodiment of the invention, the third adaptor segment is a part of a sliding element. The sliding element comprises a sliding cylinder segment having a first and second end wherein said sliding cylinder segment is attached at its first end to the third adaptor segment. The sliding cylinder segment has essentially the same shape as one of the cylinder segment attached to the first or second adaptor segments and is adapted to slide along the inside or outside of that cylinder segment.

By this approach, it is possible to correct mismatch in the calculated distance between the exhaust manifold and the heat shield.

The sliding cylinder segment may further be provided with a protrusion around the periphery, or several protrusions spaced apart along the periphery of the sliding cylinder segment near its second end. If the sliding element is fitted on the inside of the cylinder segment attached to the first or second adaptor segment, said protrusion or protrusions point outwards. In this case, the cylinder segment attached to the first or second adaptor segment is provided with a protrusion around the periphery, or several protrusions spaced apart along the periphery, near its first and/or second end, pointing inwards, i.e. in the opposite direction of the protrusion or protrusions of the sliding cylinder segment, so as to prohibit unrestricted sliding movement. This arrangement can of course be reversed, i.e. the protrusions may change direction if the sliding element is located on the outside of the cylinder segment attached to the first or second adaptor segment.

If the sliding element is located on the inside of the cylinder segment of the second adaptor segment, the protrusion near the end of the cylinder close to the second adaptor segment may be formed by an edge of the second cylinder which forms a shoulder.

This arrangement of protrusions is provided to secure the attachment of the sliding element to the heat shield so as not to lose it before mounting of the heat shield. If the sliding movement not is restricted, the sliding part may slide out and be lost. Hence, as a precaution to not lose the sliding element it is advisable to provide the adaptor with this arrangement.

A further advantageous feature which may be added to the adaptor is that at least one of the first or second adaptor segments may be provided with a profile creating an elevated portion of said segment. This elevated portion is spaced away from the outer circumference of this adaptor segment and when mounted positioned so that the side comprising said elevated portion facing the other adaptor segment. This arrangement is made in order to create a gap between the segments around the outer circumference of at least one of the adaptor segments. If the segments have the same outer circumference, the gap will be all around both the circumferences of the first and second adaptor segment. If the outer circumferences of the adaptor segments differ, there will still be a gap around the circumference of the adaptor having the smallest circumference which can be used for fitting the heat shield plate at the access openings a into the gap. In one alternative embodiment of this arrangement, either or both of the first and second adaptor segments are provided with one or several protrusions in order to create the gap. The height of the profile or the protrusions preferably corresponds essentially to the thickness of the edges of the access opening adapted to be received in the gap.

The invention further relates to a heat shield provided with at least one access opening comprising an adaptor as described herein. The adaptor is located at the access opening and thereby facilitating mounting of the heat shield to an engine part comprising protruding parts, e.g. an exhaust conduit or manifold provided with exhaust gas sensors.

The invention also relates to a heat shielding arrangement for a motor vehicle comprising a heat shield as described in the preceding paragraph. In this aspect, the distance between the heat shield, at the access opening, and the exhaust manifold (101) or conduit, comprising the sensor or probe penetrating through the access opening, is essentially the same as the height of a first cylinder segment when it is attached to an outer circumference of a third adaptor segment. Alternatively, this distance is preferably longer than a first cylinder segment but shorter than the total length of a first and a third sliding cylinder segment when said third sliding cylinder is attached to an outer circumference of a third adaptor segment.

The invention further relates to a method for installation of an adaptor for receiving a component, e.g. a sensor or a probe, in an access opening in a heat shield comprising the steps of:
- Positioning a first adaptor segment on a first side of the heat shield at the location of the access opening of a generally flat material having an outer circumference and an inner circumference, said inner circumference defines a hole in said first segment
- Positioning a second adaptor segment on the second, opposite side of the heat shield at the location of the access opening of a generally flat material having an outer circumference and an inner circumference, said inner circumference defines a hole in said second segment
- Aligning said first and second adaptor segments with each other and the access opening so as to form a through going hole adapted to receive a component, e.g. a probe or sensor
- Sandwiching said heat shield between the parts closest to the outer circumference of said first and second adaptor segments while there is no heat shield between the parts closest to the inner circumference of said first and second adaptor segments
- Attaching said first and second adaptor segments directly or indirectly to each other.

According to a first embodiment of mounting the adaptor to the heat shield, the adaptor segments are attached to each other in the area where there is no heat shield between the first and second adaptor segments. The first and second adaptor segments may be attached to each other by any suitable method, e.g. spot welding or by rivets

According to another embodiment of mounting the adaptor to the heat shield are the adaptor segments attached to each other by means of a clamping arrangement. Tongues located at the inner circumference on one of the adaptor segments function as clips. The adaptor segment provided with tongues encircles a cylinder segment attached to the other adaptor segment and clamps it to the cylinder segment.

By giving the elements of the adaptor certain dimensions and shapes it is possible to make the adaptor segments to align at right positions and indicating where the components shall be attached together. In an advantageous method either the first and/or second adaptor segments comprises a protrusion or raised portion in the area where there is no heat shield between the first and second adaptor segments. The height of the raised portion preferably corresponds to the thickness of the heat shield at the edges of the access opening. It would of course also be possible to insert a separate element of the same thickness as the heat shield in order to create the desired gap between the adaptor segments at the circumference of the adaptor.

In the following examples the adaptor segments are formed from thin sheet metal which is pressed and bent into a desired shape. However, this element may also be a lamella or ring. The shape of the inner circumference is circular in the following embodiments but may be oval, square or of any desired shape suited to fit with the object penetrating the heat shield. Likewise, the outer circumference may be of any desired shape and need not to be the same as the hole defined by the inner circumferences.

### BRIEF DESCRIPTION OF DRAWINGS

In the following part the invention is described by some illustrated examples wherein:
Fig. 1A is a perspective view of a heat shield comprising an access opening provided with an adaptor
Fig. 1B is a perspective view of an intersection of an adaptor when fitted in a heat shield and located at a probe location site in the exhaust manifold
Fig. 1C is a perspective view of an intersection of an adaptor as shown in fig. 1B having a probe installed
Fig. 2A is a perspective view of an adaptor according to a first embodiment of the invention
Fig. 2B is a cross sectional side view along the line A-A in fig. 3A
Fig.3A is a perspective view of an adaptor according to a second embodiment of the invention
Fig. 3B is a cross sectional side view along the line B-B in fig. 3A
Fig. 3C is a cross sectional side view of an alternative design of the second embodiment of the invention
Fig. 4A is a perspective view of an adaptor according to a third embodiment of the invention
Fig. 4B is a cross sectional side view along the line C-C in fig. 4A
Fig. 4C is a cross sectional side view of an adaptor wherein the adaptor segments are attached to each other by means of fastening clips
Fig. 4D is a perspective view of the adaptor segment provided with tongues adapted to work as fastening clips
Fig.5A is a perspective view of an alternative design of the invention
Fig.5B is a perspective view of still another alternative design of the invention

### EMBODIMENT(S) OF THE INVENTION

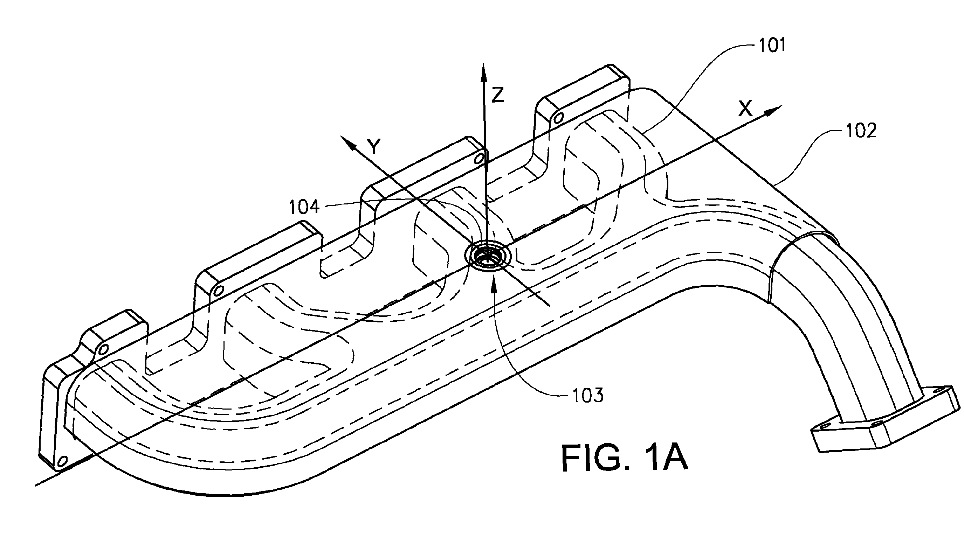

In figure 1A, an exhaust manifold 101 and an associated heat shield 102 is shown. The heat shield comprises an access opening 103 provided with an adaptor 104. There might of course be several access openings and adaptors in a heat shield of different sizes and shapes. The heat shield 102 is usually spaced apart from the exhaust manifold 101 with a distance of about 1 cm. This distance may differ at different locations or for different engines. The distance is a compromise of having good thermal insulation, created by the air gap between the exhaust manifold 101 and the heat shield 102, and a desire to keep the distance short in order to compact the engine space needed.

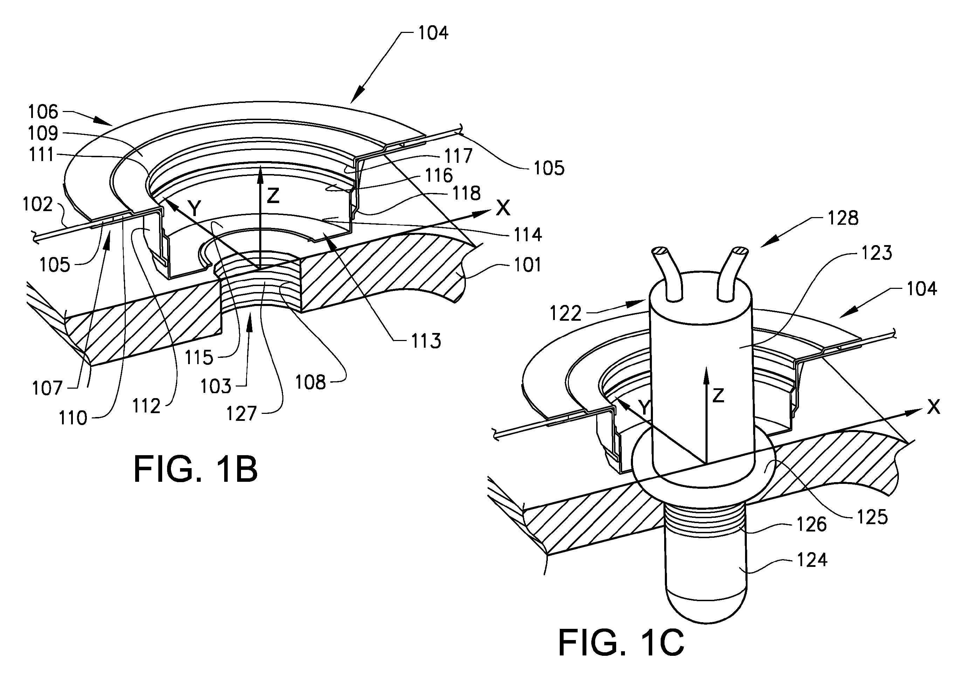

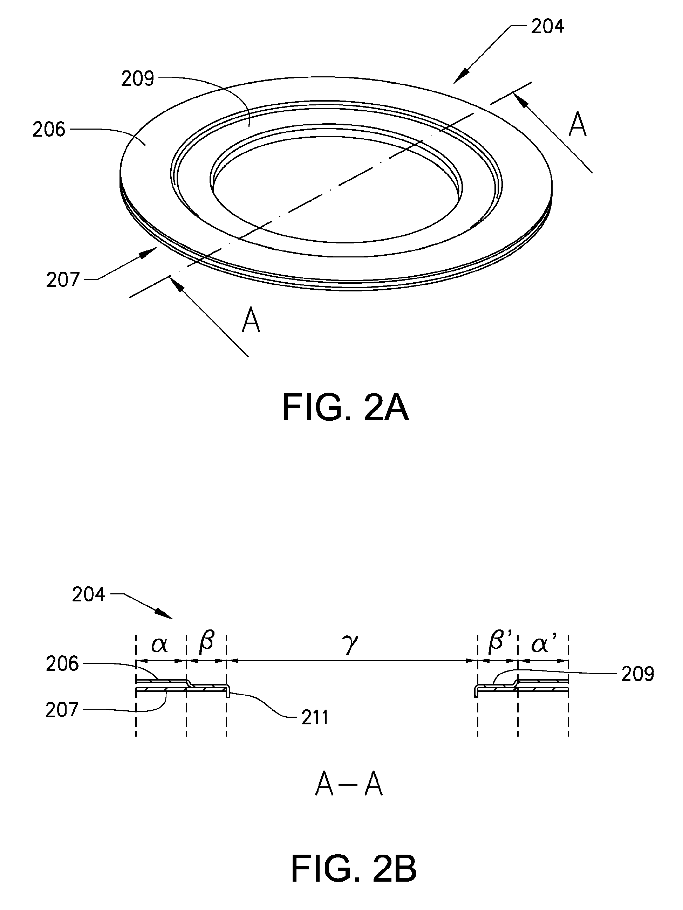

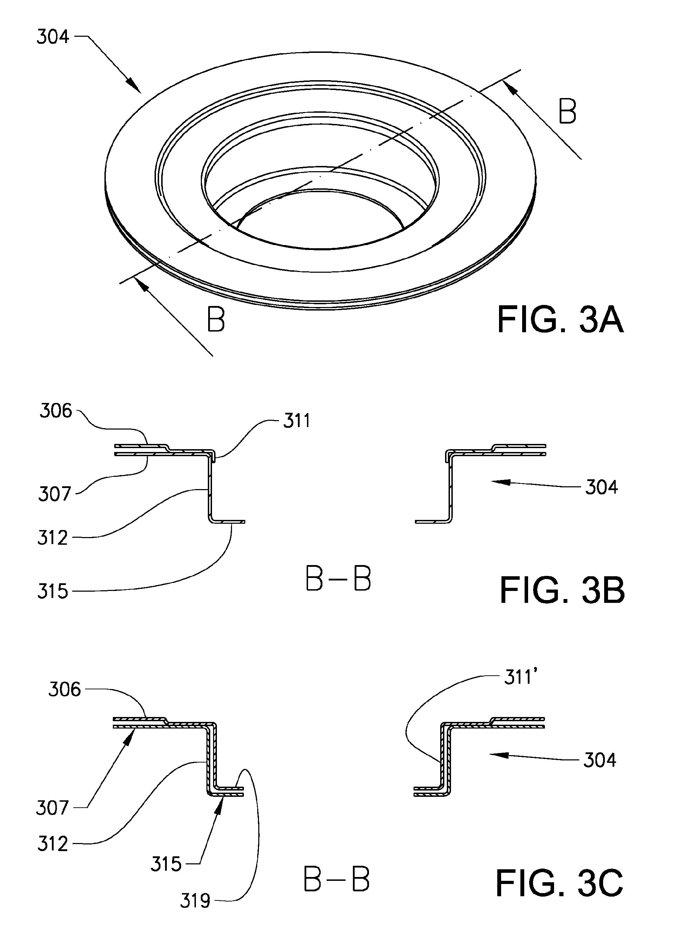

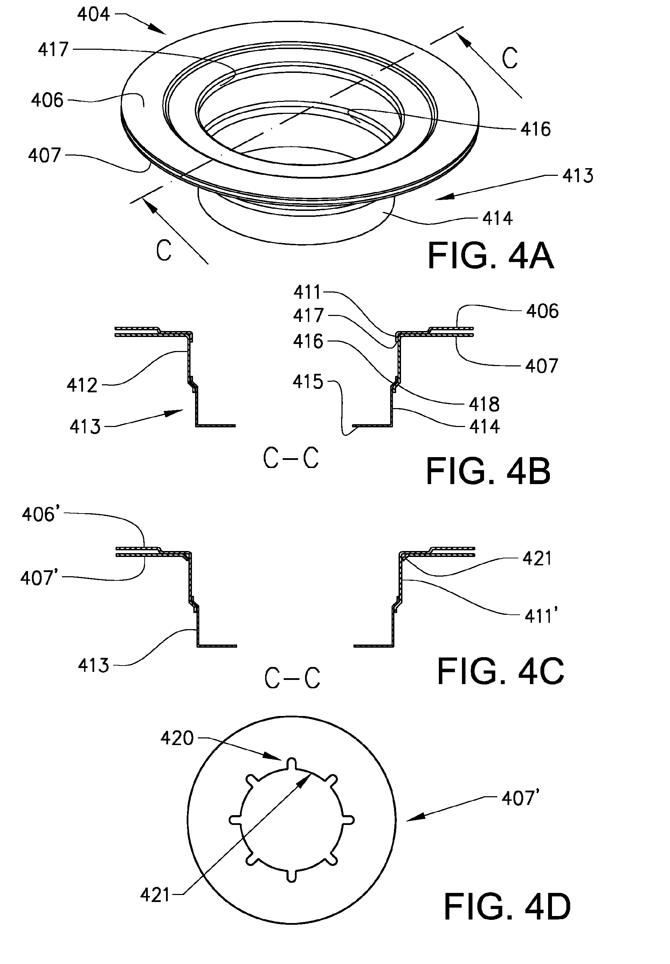

In figure 1B, a sectional view of the access opening 103 provided with the adaptor 104 is shown. The access opening 103 is defined by the edges 105 of the heat shield 102 encircling the access opening 103. The adaptor 104 comprises a first adaptor segment 106 and a second adaptor segment 107. In this case, the adaptor segments 106, 107 have a generally annular shape in order to fit the circular shape of the access opening 103. The adaptor segments 106, 107 are made of a thin sheet material, e.g. metal, which can be cut and bent to the desired shape. However, the adaptor segments 106, 107 may be of any suitable, heat resistant material and may have any desired shape, e.g. oval, quadratic, hexagon, figure shaped, in order to suitably fit with the form of the access opening. In its most simplistic form, the adaptor 104 only comprises the adaptor segments 106, 107 suitably attached to each other. This simplistic form is further described in figure 2. In fig. 1B, it is further shown that the access opening 103 and the adaptor is fitted over a sensor hole 108 adapted to receive a lambda sensor or heat sensor (not shown). It is of course obvious that the kind of device which shall be inserted into the exhaust stream of the manifold 101 is not important for the inventive idea but would work for any kind of device intended to penetrate through the heat shield 102. It is further shown that the first adaptor segment 106 is bent all around to form an annular, raised portion 109 near its inner circumference. When put together, the side of the first adaptor segment 106 comprising the raised portion 109 faces the second adaptor segment 107 whereby the raised portion 109 contributes to the formation of a gap 110 between the adaptor segments 106,107. The ability of the adaptor 104 to adjust for mismatch in the manufacturing precision of aligning the access opening 103 with the sensor hole 108 is limited by the allowed movement in the plane of the surface (x - y plane) of the heat shield 102. This in turn is decided by the dimensions and proportions of the access opening 103 and the dimensions of the adaptor segments 106, 107 and its raised portion and attachment points to each other. This will also be further discussed and showed in connection with figure 2. It is further shown in fig. 1B that the first adaptor segment 106 is provided with a first cylinder segment 111 at its inner circumference and the second adaptor segment 107 is provided with a second cylinder segment 112 at its inner circumference. This design will be further discussed and explained more in detail in connection with figures 3 and 4. The adaptor 104 in figure 1B further includes a sliding element 113 comprising a third cylinder segment 114 and a third adaptor segment 115. The third cylinder segment 114 is connected at its lower end to the outer circumference of the third adaptor segment 115. This third cylinder segment 114 is fitted on the inside of the second cylinder segment 112 so as to achieve a sliding connection with each other in order to enable adjusting possibility for mismatch in the manufacturing precision concerning the distance from the exhaust manifold 101 with the sensor hole 108 to the heat shield 102 with the access opening 103 in a direction perpendicular to the plane of the surface (x - y plane) of the heat shield 102, i.e. the z-direction. The third cylinder segment 114 is further provided with an annular protrusion 116 near its upper end and protruding outwards. This protrusion 116 works as a restriction for unlimited gliding movement along the second cylinder segment 112. The upwards movement is restricted by a protrusion on the inside of the second cylinder segment 112 near its upper end in the form of a shoulder 117 formed by the lower edge of the first cylinder segment 111. The downwards movement is restricted by a protrusion on the inside of the second cylinder segment 112 near its lower end in the form of a bent part 118 near the lower edge of the second cylinder segment 112. These protrusions 116, 117, 118 which works as a restriction to unlimited sliding motion is not necessary in order to make the invention work but will function to keep the sliding element 113 in place and attached to the heat shield 102 so as not to lose this element 113 before the heat shield 102 is mounted to the engine manifold 101.

Of course it would also be possible to mount the sliding element 113 on the outside of the second cylinder segment. It is further obvious that the length of the first and second cylinder segments 111, 112 may be switched and the sliding restriction arrangement may be re-arranged so as to achieve the desired effect in this case as well, e.g. the restriction shoulder 117 formed by the first cylinder segment may be replaced with an ordinary protrusion on the inside of the first cylinder segment.

It is further shown that the access opening 103 in the exhaust manifold 101 comprises threads 127 in order to be able to screw a sensor onto the exhaust manifold.

In fig. 1C, a sensor 122 is installed in the access opening 103 (see fig. 1B) provided with an adaptor 104. The sensor 122 comprises a sensor head 123 to be shielded from heat and a sensor element 124 adapted to be in contact with hot gases. The probe is further provided with a skirt 125 at the location where the head 123 and element 124 meet. The part at the sensor element side of the skirt 125 right next to the skirt is provided with threads 126 to fit with the threads 127 (see fig. 1B) provided at the edge of the access opening 103 of the exhaust manifold 101. By this arrangement, it will be possible to securely fix the sensor 122 to the access opening 103. The sensor 122 is further connected to a control unit (not shown) by means of wires 128 provided at the top of the sensor head 123 for transmitting measured data to be processed by the control unit.

In this case, the sensor is attached to the access opening by means of screwing the probe onto the threaded part of the access opening. This arrangement may of course be substituted for another suitable connecting arrangement and the inventive concept of using an adaptor for the sensor would work for a wide variety of connecting arrangements and shapes of the sensor.

As shown in fig. 1C, these probes or sensors have generally one part penetrating through the wall of the exhaust gas conduit or manifold, the part comprising a sensing element, in order to be in contact with the exhaust gases and another part, the sensor head, protruding out from the conduit or manifold.

In fig. 2A, a perspective view of an adaptor 204 is shown having a first adaptor segment 206 and a second adaptor segment 207. Even though there is a small cylinder segment 211, which is better shown in fig. 2B, attached to the adaptor segment, this is not a necessary feature. However, by means of this small cylinder segment 211 it will be easier to align the adaptor segments 206, 207 when attaching the segments to each other. This cylinder portion could of course be placed at either of the adaptor segments 206, 207. It can further be seen that the first cylinder segment 206 comprises an annular, raised portion 209 near its inner circumference. This raised portion could have been placed on the other adaptor segment, replaced with protrusions or a separate ring element or other suitable means for creating a distance between the adaptor segments 206,207 at their peripheral parts. Furthermore, the raised portion is placed at the inner circumference of first cylinder segment. This feature is not essential, the main point is that the raised portion is spaced away from the outer circumference in order to create a gap at the outer circumference which thereby can receive an edge of the access opening in the heat shield. The distance thereby created preferably corresponds to the thickness of the heat shield near the access opening.

Referring to fig. 2B, there are shown the distance of different parts along the intersection taken along the section line A-A which in this case corresponds to the diameter of the annular adaptor 204. The total distance is α+ α'+ β+ β'+ γ. In this case, α = α' and β = β' since the adaptor have the shape of a symmetrical ring. In order to fit in the hole, the diameter of the hole must be at least β + β' + γ. If this is the size, then there would be no distance to play with in order to create a broader tolerance. On the other hand, if the size of the diameter of the hole is larger than β+ β'+ γ + α, than there is a risk that a part of the access opening not will be tightly sealed at its edges when using the adaptor. Hence, the size (the diameter) of the hole is preferably between β+β'+γ and β+β'+γ+α. The closer the diameter of the hole is to the larger preferred distance, the more adaptive distance is achieved. If α and α' are of different sizes, the size of the smallest α shall be considered when calculating the maximum diameter of the hole. In this case the calculation has been made on basis of a circular adaptor and hole. However, the same underlying theory will work for intersections of holes and adaptors of any desired shapes and the skilled person in the art should be able to calculate and try out proper dimensions for different sizes and shapes of holes to achieve enough tolerance in fitting while still having a tight seal.

The adaptor described in fig. 2 comprises two essentially planar elements. This embodiment is intended to be used when there is a desire for having a close fit with an element in the same plane as the heat shield. In this case, the part of the element between the heat shield and the exhaust manifold will not be protected from the streaming hot air.

In figures 3 - 5, different embodiments are shown wherein the adaptor comprises an elevated portion. These embodiments will give the adaptor element the general shape of a hat. In these cases, the intended idea is to shield the complete part of the probe or the like, which is attached to and sticks out of the exhaust manifold.

The adaptor 304 described in fig. 3 differs from the adaptor 204 described in figure 2 in that there is a further third adaptor segment 315 in addition to the first and second adaptor segments 306,307. The second adaptor segment 307 and the third adaptor segment 315 are connected by a second cylinder segment 312 placed on the outside of the first cylinder segment 311. The second adaptor segment 307 is located essentially in the same plane as the heat shield (the x-y plane) and is attached at its inner circumference to the upper end of the second cylinder segment 312. The lower end of the second cylinder segment 312 is further attached to the outer circumference of the third adaptor segment 315. This part is essentially located in a plane parallel to the plane of the heat shield (the x-y plane) but spaced apart from that plane by the distance made up by the height of the cylinder segment 312. The height of the second cylinder segment 312 usually corresponds to the distance between the heat shield and the exhaust manifold. By this arrangement it will be possible to shield the complete part of the probe which is extending out through the wall of the exhaust manifold from the hot gases trapped between the shield and the manifold. In this embodiment, the third adaptor segment 315 is connected to the second adaptor segment 307 but it would of course be possible to connect it to the first adaptor segment 306 instead.

In fig. 3c, an alternative design of the second embodiment is shown. The first cylinder segment 311' is of essentially the same height as the second cylinder segment 312. The first cylinder segment 311 is further connected to a fourth adaptor segment 319. The cylinder segments 311,312 and the third and fourth adaptor segments 315,319 are placed near each other but spaced apart in order to improve the heat insulation and decrease the heat radiation from the adaptor 304 to a probe or sensor located in the adaptor. It would of course be possible to place any kind of heat insulating material in the space created between the cylinder segments and/or the adaptor segments.

In figure 4, the adaptor shown in figure 1 is showed in detail. The basic idea concerning the way of heat shielding the object is the same as for the embodiment described in figure 3 but in this case there is a possibility to adapt the height of the cylindrical part so as to achieve a broader tolerance for the fitting of the distance between the exhaust manifold with the probe and the heat shield comprising the access opening. The adaptor 404 comprises a first adaptor segment 406 attached to a first cylinder segment 411, a second adaptor segment 407 attached to a second cylinder segment 412 and a sliding element 413 comprising a third cylinder segment 414 and a third adaptor segment 415. The sliding element 413 is placed in its lowermost position. In this position, an annular protrusion 416 placed near the upper end on the outside of the third cylinder segment 414 of the sliding element 413 is engaged with a protrusion 418 formed at the lower end on the inside of the second cylinder segment 412 so as to restrict further movement of the sliding element downwards. When moved upwards, the movement is restricted by a protrusion on the inside of the second cylinder segment 412 in the form of a shoulder 417 formed by an edge of the first cylinder segment 411. Hence, the maximum movement is restricted by the distance between the upper protrusion 417 and the lower protrusion 418 of the second cylinder segment 412.

In figure 4c and 4d, an alternative way of attaching the adaptor segments 406', 407' is shown. The second adaptor segment 407' is provided with indentations 420 at its inner circumference. The indentations will create tongues 421 which can be used as clips in order to attach the second adaptor segment 407' to the first adaptor segment 406' by means of clamping the tongues against the first cylinder segment 411' which is connected to the first adaptor segment. To be noted, in figure 4c is it the first cylinder segment 411' which functions as the sliding guide for the sliding element 413.

This clips arrangement would of course be possible to apply in any of the other embodiments which are shown in the figures.

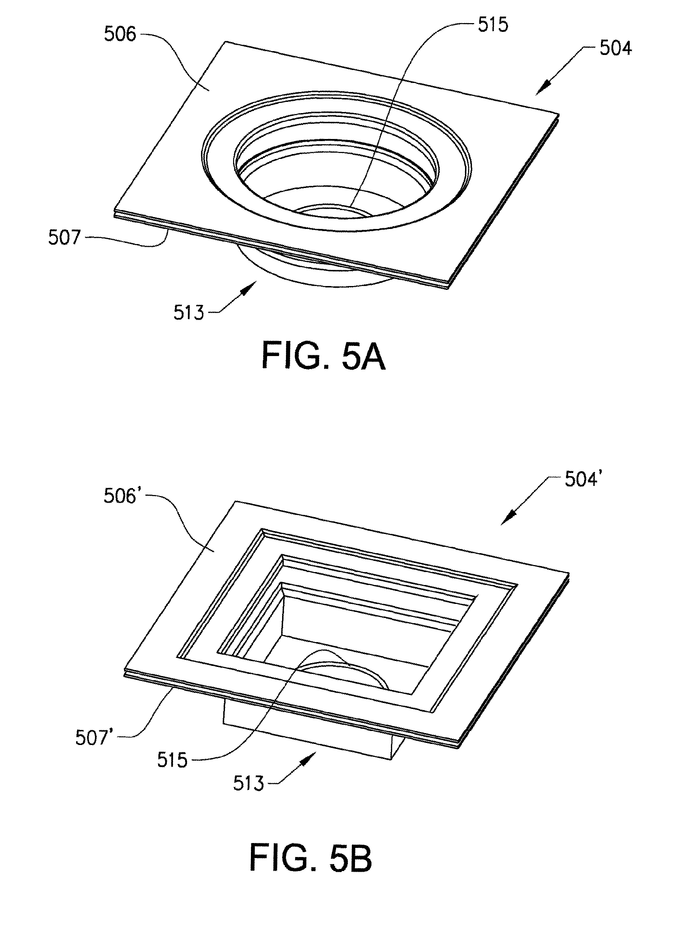

In fig. 5A and 5B alternative designs of the adaptor is shown. The adaptor 504 in fig 5A has a quadratic outer circumference of the adaptor segments 506, 507. The adaptor 504' in fig 5B has a quadratic outer and inner circumference of the adaptor segments 506', 507' so as to fit in a quadratic access opening. The inner circumference of the third adaptor segment 515 of the sliding element 513 is still circular but could as well have been made quadratic. Hence, it is possible to adapt the outer circumference of the adaptor in accordance with certain geometry of the access openings and changing the inner circumference according to the object around which it shall fit. Also the cylinder segments could have been changed to be rectangular cylinder segments.

In the foregoing embodiments, the invention is described by means of examples. However, the inventive idea and scoop of protection shall not be limited to these examples. There is a wide variety of possible modifications, e.g. to change the form, material and method of making the adaptor and the heat shield, of the described embodiments within this inventive idea.

## Claims

1. An adaptor (104,204,304,404,504) for receiving a component in access openings (103) in a heat shield (102) of a vehicle, comprising:
- A first adaptor segment (106,206,306,406,506) of a generally flat material having an outer circumference and an inner circumference, said inner circumference defining a first hole in said first segment (106,206,306,406,506)
- A second adaptor segment (107,207,307,407,507) of a generally flat material having an outer circumference and an inner circumference, said inner circumference defining a second hole in said second segment (107,207,307,407,507)
- One of said first and second adaptor segments (106,206,306,406,506; 107,207,307,407,507) being positioned on top of the other adaptor segment (106,206,306,406,506; 107,207,307,407,507) so as to form a through going hole, said adaptor segments being attached to each other at a location spaced apart from their outer circumferences so as to form a gap (110) between each other at at least one of the adaptor segments (106,206,306,406,506; 107,207,307,407,507) outer circumferences around the hole
- Said gap (110) being adapted to receive an edge of an access opening (103) of the heat shield so as to allow the adaptor (104,204,304,404,504) to move in the plane of the heat shield (X-Y plane).

2. An adaptor (104,204,304,404,504) according to claim 1 **characterized in that** at least one of the adaptor segments (106,206,306,406,506; 107,207,307,407,507) comprises a first cylinder segment (111,211,311,411,511; 112,212,312,412,512) having a first end and a second end, said first end having a circumference of essentially the same shape and size as the inner circumference of said at least one segment (106,206,306,406,506; 107,207,307,407,507), said first end of the first cylinder segment being attached to the inner circumference of the at least one segment (106,206,306,406,506; 107,207,307,407,507)

3. An adaptor (104,304,404,504) according to claim 2, **characterized in that** the other adaptor segment (106,306,406,506; 107,307,407,507) comprises a second cylinder segment (111,311,411,511; 112,312,412,512) attached to the inner circumference of the other segment (106,306,406,506; 107,307,407,507).

4. An adaptor (304) according to claims 2 or 3 **characterized in that** a second end of the first cylinder segment (311,312) is attached to an outer circumference of a third adaptor segment (315). (fig 3)

5. An adaptor (304) according to claim 4 **characterized in that** the adaptor segment (306, 307), the first cylinder segment (311,312) and the third adaptor segment (315) is formed in one piece by moulding, compression moulding, pressing or bending of sheet metal. (fig 3)

6. An adaptor (104,404,504) according to claims 2 or 3 **characterized in that** the adaptor comprises a sliding element (113, 413,513), said sliding element comprising a sliding cylinder segment (114,414,514) having a first and second end, said sliding cylinder segment being attached at its first end to a third adaptor segment (115, 415, 515), said sliding cylinder segment (114,414,514) having essentially the same shape as said first cylinder segment (111,411,511; 112,412,512) and being adapted to slide along the inside or outside of said first cylinder segment. (fig 4)

7. An adaptor (104,404,504) according to claim 6 **characterized in that** said sliding cylinder segment (114,414,514) is provided with a protrusion (116,416,516) around the periphery, or several protrusion spaced a part along the periphery, of the sliding cylinder segment (114,414,514) near its second end, said protrusion or protrusions pointing inwards or outwards and said first cylinder segment (111,411,511; 112,412,512) being provided with a protrusion around the periphery (117,417,517;118,418,518), or several protrusion spaced a part along the periphery, near its first and/or second end, said protrusion or protrusions (117,417,517;118,418,518) pointing in the opposite direction of the protrusion or protrusions (116,416,516) of the sliding cylinder segment so as to prohibit unrestricted sliding movement. (fig. 4)

8. An adaptor (104,204,304,404,504) according to claim 7 **characterized in that** the protrusion or protrusions of the sliding cylinder segment (116,416,516) is pointing outwards and the first cylinder segment is provided with one or several protrusions near its first end (117,417,517). (fig. 4)

9. An adaptor (104,204,304,404,504) according to claim 8 **characterized in that** the protrusion near the first end of the first cylinder is formed by an edge (117,417,517) of the second cylinder forming a shoulder. (fig. 4)

10. An adaptor (104,204,304,404,504) according to anyone of the preceeding claims **characterized in that** at least one of the segments (106,206,306,406,506; 107,207,307,407,507) has a profile creating an elevated portion (109,209,309,409,509) of said segment spaced apart from the outer circumference, said at least one segment being positioned so that the side comprising said elevated portion facing the other segment in order to create the gap (110) between the segments around the outer circumference of at least one of the adaptor segments.

11. An adaptor (104,204,304,404,504) according to anyone of claims 1-9 **characterized in that** at least one of the segments (106,206,306,406,506; 107,207,307,407,507) has one or several protrusions creating an elevated portion of said segment spaced apart from the outer circumference, said at least one segment being positioned so that the side comprising said elevated portion facing the other segment in order to create the gap (110) between the segments around the outer circumference of at least one of the adaptor segments.

12. An adaptor (104,204,304,404,504) according to claim 10 or 11 **characterized in that** the height of the profile (110) or the protrusions corresponds essentially to the thickness of the edges of the access opening (103) adapted to be received in said gap (110).

13. A heat shield (102) provided with at least on access opening (103) **characterized in that** it comprises an adaptor (104,204,304,404,504) according to anyone of claims 1-12, said adaptor (104,204,304,404,504) positioned at said opening.

14. A heat shielding arrangement in the engine compartment of a motor vehicle comprising a heat shield (102) provided with at least one access opening (103) **characterized in that** the at least one access opening is provided with an adaptor (104,204,304,404,504) according to anyone of claims 1-12.

15. A heat shielding arrangement according to claim 14 **characterized in that** the distance between the heat shield (102), at the access opening (103), and the exhaust manifold (101) or conduit comprising the sensor or probe penetrating through the access opening, is essentially the same as the height of a first cylinder segment (311,312) is attached to an outer circumference of a third adaptor segment (315). (fig 3)

16. A heat shielding arrangement according to claim 14 **characterized in that** that the adaptor comprises a sliding element (113, 413,513), said sliding element comprising a sliding cylinder segment (114,414,514) having a first and second end, said sliding cylinder segment being attached at its first end to a third adaptor segment (115, 415, 515), said sliding cylinder segment (114,414,514) having essentially the same shape as a first cylinder segment (111,411,511; 112,412,512) and being adapted to slide along the inside or outside of said first cylinder segment wherein the distance between the heat shield (102), at the access opening (103), and the exhaust manifold (101) or conduit comprising the sensor or probe penetrating through the access opening (103) is essentially longer than the height of the first cylinder segment (111,411,511; 112,412,512) but shorter than the total length of the first cylinder segment (111,411,511; 112,412,512) and the sliding cylinder segment (114,414,514). (fig 4)

17. A method for installation of an adaptor (104,204,304,404,504) for receiving a component, e.g. a sensor or a probe, in an access opening (103) in a heat shield (102) comprising the steps of:
- Positioning a first adaptor segment (106,206,306,406,506) on a first side of the heat shield (102) at the location of the access opening (103) of a generally flat material having an outer circumference and an inner circumference, said inner circumference defines a hole in said first segment (106,206,306,406,506)
- Positioning a second adaptor segment (107,207,307,407,507) on the second, opposite side of the heat shield (102) at the location of the access opening (103) of a generally flat material having an outer circumference and an inner circumference, said inner circumference defines a hole in said second segment (107,207,307,407,507)
- Aligning said first and second adaptor segments (106,206,306,406,506; 107,207,307,407,507) with each other and the access opening so as to form a through going hole
- Sandwiching said heat shield (102) between the parts closest to the outer circumference of said first and second adaptor segments (106,206,306,406,506; 107,207,307,407,507) while there is no heat shield between the parts closest to the inner circumference of said first and second adaptor segments (106,206,306,406,506; 107,207,307,407,507)
- Attaching said first and second adaptor segments (106,206,306,406,506; 107,207,307,407,507) directly or indirectly to each other

18. A method according to claim 17 **characterized in that** said first and second adaptor segments (106,206,306,406,506; 107,207,307,407,507) being attached to each other in the area where there is no heat shield (102) between the first and second adaptor segments (106,206,306,406,506; 107,207,307,407,507)

19. A method according to claim 17 **characterized in that** said first and second adaptor segments (406, 407) being attached to each other by means of tongues (421) located at the inner circumference on the second adaptor segment (406), said tongues clamping against a first cylinder segment (411') which is connected to the first adaptor segment.

20. A method according to claim 17 **characterized in that** the first and second adaptor segments (106,206,306,406,506; 107,207,307,407,507) are being attached to each other by means of spot welding.

21. A method according to anyone of claims 17 to 20 **characterized in that** either the first and/or second adaptor segments (106,206,306,406,506; 107,207,307,407,507) comprises a protrusion or raised portion (109,209,309,409,509) in the area where there is no heat shield (102) between the first and second adaptor segments (106,206,306,406,506; 107,207,307,407,507), the height of said raised portion (109,209,309,409,509) essentially equal to the thickness of the heat shield (102) at the edges of the access opening (103).
